# EUROPEAN PATENT SPECIFICATION

(11) **EP 2 329 925 B1**
(45) Date of publication and mention of the grant of the patent: **25.07.2012**
(21) Application number: 10192758.0
(22) Date of filing: 26.11.2010
(51) Int. Cl.: B25J 15/06, B25J 17/02, B23P 19/00

(54) **Device for gripping objects**
Vorrichtung zum Ergreifen von Objekten
Dispositif permettant de saisir des objets

(30) Priority: 30.11.2009 NL 1037512
(43) Date of publication of application: 08.06.2011
(73) Proprietor: Vanderlande Industries B.V., 5466 RB Veghel (NL)
(72) Inventor: Van De Plassche, Evert Johan, 5406 AS UDEN (NL)
(74) Representative: Algemeen Octrooi- en Merkenbureau

(56) References cited:
- EP-A1- 0 264 213
- DE-A1- 3 036 116
- DE-A1- 3 226 834
- US-A- 4 266 905
- US-A- 4 599 036
- US-A- 5 632 590

## Description

The present invention relates to a device for gripping objects, comprising at least one suction cup which can be connected to a vacuum source via a vacuum line, a main frame which can be connected to a manipulator head, a suction cup frame to which said at least one suction cup is rigidly connected, and a connecting element which connects the suction cup frame and the main frame.

A gripping device is known from German patent application EP-A1-30 36 116. Said gripping device comprises a suction cup frame to which a single (relatively short) suction cup is attached, and which is flexibly connected to a main frame by means of a double universal joint. Such a gripping device is used in pick-and-place situations. Because of the flexible connection, it is also possible to engage a (box-shaped) object if the object in question is not correctly oriented or, in other words, if a flat upper side of the object includes an angle with a horizontal, because the suction cup is capable of adjusting its orientation in dependence on the object.

A drawback of the known gripping device is that precisely because of said flexible connection the object, once it has been engaged by a suction cup, can start to oscillate while being suspended from the suction cup. Thus there is an increased risk of the engagement being lost, for example as a result of the oscillating object bumping against something or as a result of mass inertia effects during manipulation. Said risk in particular plays a part if the centre of gravity of the object is not located directly below the point of engagement by the suction cup.

It is furthermore known to make use of relatively long harmonicalike suction cups for engaging obliquely oriented objects. In practice the flexibility of such suction cups frequently appears to be insufficient for engaging obliquely oriented objects with an acceptable degree of reliability.

A gripping device as described in the preamble of claim 1 is known from US 4,266,905.

The primary object of the present invention is to provide a solution to the above problems. In order to accomplish that object, the gripping device according to the invention is characterised in that the device also comprises fixation means comprising at least one fixation element as well as moving means for moving said at least one fixation element and said suction cup frame relative to each other between a fixed position, in which said at least one fixation element and said suction a fixed position, in which said at least one fixation element and said suction cup frame are rigidly positioned relative to each other on account of their mutual abutment, and a free position, in which said at least one fixation element and said suction cup frame are clear of each other. The use of fixation means, makes it possible to give the suction cup frame a large degree of freedom of movement upon engagement of an object, so that the suction cup frame can optimally adjust its orientation to the orientation of an object to be engaged, whilst on the other hand said freedom is entirely absent when the object is being moved after being engaged by said at least one suction cup, which is advantageous upon further manipulation of the engaged object. The use of said at least one fixation element makes it possible in a constructionally simple manner to (temporarily) eliminate the flexible nature of the connection between the suction cup frame and the main frame as provided by the connecting element, which is advantageous once an object has been engaged by said at least one suction cup in order to thus prevent oscillation of the object. Precisely because oscillation can be prevented, the invention provides the advantageous possibility of placing an object, once it has been engaged, at another position with a high degree of precision during the placement phase of the pick-and-place process.

A flexible connection is realized between the suction cup frame and the main frame in the free position of the fixation means by making use of a connecting element which comprises a number of connecting rod parts as well as a hinge means for hinging the connecting rod parts together at the ends thereof. The main advantage that is achieved in this manner is that rotation of an object about the (articulated) axis of the connecting element once the object has been engaged will not be possible, not even if the fixation means are still in their free position. This characteristic can be utilised in a very advantageous manner if the object is to be positioned in a controlled orientation, for example in a collecting bin or on a pallet that must be optimally filled.

The degree of flexibility is enhanced by the hinge means which enable the two connected connecting rod parts to hinge in two mutually perpendicular directions relative to each other.

Preferably, the suction cup frame moves towards said at least one fixation element or away from said at least one fixation element when being moved between the fixed position and the free position by the moving means. In this preferred embodiment there is no need for the manipulator, to the manipulator head of which the gripping device according to the invention is attached, to lift the object immediately after engaging the same. In addition, a fixed position can thus already be achieved during the first phase of said lifting, in which position further movement of the object with respect to the main frame is not possible, therefore.

A stable mutual abutment of said at least one fixation element and the suction cup frame can be realised in a reliable manner in particular if, according to another preferred embodiment, said at least one fixation element and said suction cup frame have matching shapes at the location where they abut in the fixed position. Making use of said matching shapes, a certain degree of self-location can furthermore be obtained, but in addition also a defined positioning of the suction cup frame relative to the main frame. Said defined positioning is in particular advantageous if it is desirable that an engaged object be placed very precisely, for example in a collecting bin or on a tray, for example in order to achieve an efficient utilisation of available space.

To realise a reliable and stable engagement of an object to be engaged it is preferable if three suction cups are connected to the suction cup frame. The three suction cups can in that case jointly define a plane which coincides with the surface of the object via which the object is engaged by the three suction cups.

The three suction cups are preferably arranged in an evenly spaced, triangular configuration.

To help achieve a correct abutment of said at least one fixation element and said suction cup frame in the fixed position of the fixation means, it is furthermore preferable if the device comprises guide means for guiding the connecting element during the movement of said at least one fixation element and said suction cup frame relative to each other.

The invention further provides a method for operating a device according to the invention as described in the foregoing, whether or not in a preferred embodiment thereof, said method comprising the steps of:
- providing the device connected to a manipulator head of a manipulator,
- moving the device by means of said manipulator to a position directly above an object to be engaged,
- moving the device downwards by means of said manipulator until said at least one suction cup abuts against the object to be engaged, whilst the fixation means are in a free position,
- engaging the object through suction force by means of said at least one suction cup,
- moving the device and the object suspended from said at least one suction cup upwards by means of the manipulator, at least until the object is completely clear of its environment,
- putting the fixation means in the fixed position,
- further moving the device and the object suspended from said at least one suction cup to another position by means of the manipulator,
- releasing the object engaged by said at least one suction cup at said other position.

The invention will now be explained in more detail by means of a description of three preferred embodiments of the invention, which are to be regarded as not limiting the purport of the invention, with reference to the following schematic figures:
Figure 1a is a perspective view of a first preferred embodiment of a gripping device according to the invention in a free position thereof;
Figure 1b is a (partially) transparent side view of the gripping device according to figure 1a in a fixed position thereof;
Figure 2 is a perspective view of a second preferred embodiment of the gripping device according to the invention in a free position thereof;
Figures 3a and 3b are (partially transparent) side views of the gripping device of figure 2 in the free position and in a fixed position thereof, respectively;
Figures 4a and 4b are perspective views of a gripping device according to a third preferred embodiment of the device in a free position and in a fixed position thereof, respectively;
Figures 5a - 5f shows six successive stages during the use of a gripping device according to the third preferred embodiment as shown in figures 4a and 4b.

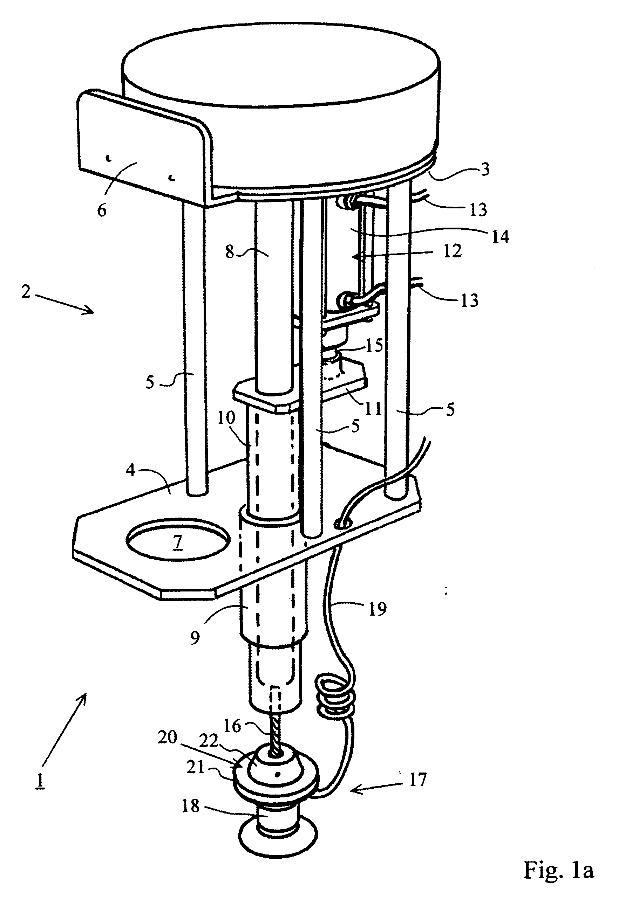

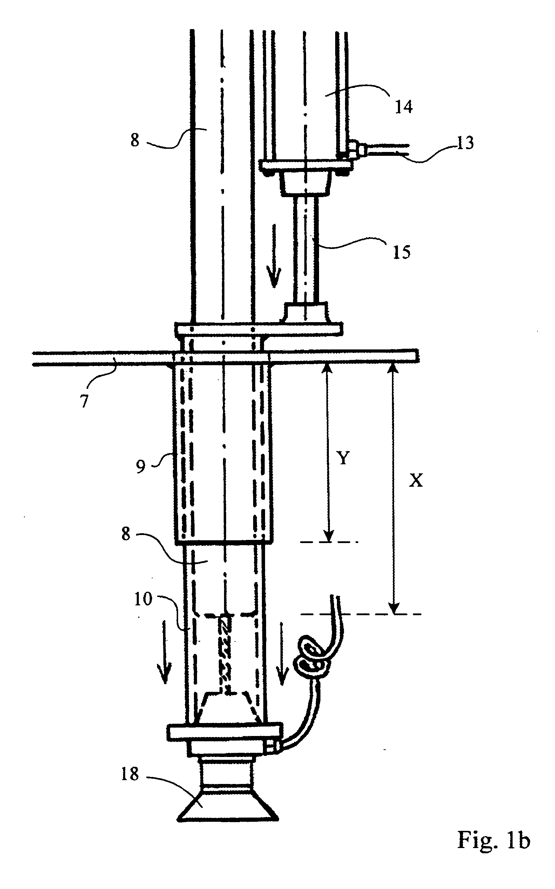

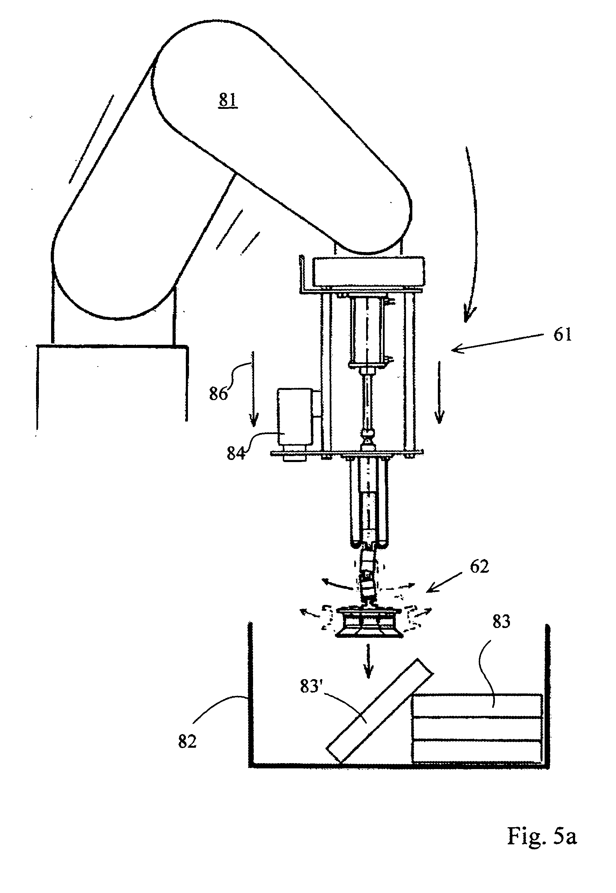

Figures 1 a and 1 b show a gripping device 1 (or at least part thereof) according to a first preferred embodiment of the present invention. The gripping device 1 comprises a main frame 2. The main frame 2 comprises a disc-shaped upper plate 3 and an at least substantially rectangular lower plate 4 extending parallel thereto, which plates are rigidly interconnected, being spaced from each other, via four columns 5, three of which are shown in figure 1a, the fourth being hidden from view. At the outer side of the main frame 2, the upper plate 3 comprises a part 6 which is bent over at right angles. At the same outer side of the main frame 2, the lower plate 4 extends sideways. An opening 7 is provided in said laterally extending part. A video camera that faces downwards can be mounted to said bent-over part 6, with the lens (numeral 84 in figure 5a) of the video camera extending through the opening 7. Such a video camera can provide visual information about an object that is to be engaged by means of the gripping device 1.

The main frame 2 further comprises a cylindrical guide rod 8, which extends vertically downwards from the underside of the upper plate 3 through an opening in the lower plate 4 and whose lower end is spaced from the underside of the lower plate 4 by a distance X at the bottom side thereof. The main frame 2 further comprises a guide bush 9, which extends vertically downwards from the bottom side of the lower plate 4, the bottom end of which guide bush 9 is spaced from the underside of the lower plate 4 by a distance Y. The external diameter of the guide rod 8 is smaller than the internal diameter of the guide bush 9, so that a tubular space is present between the guide rod 8 and the guide bush 9. Said space is occupied by part of the length of a guide bush 10, which is rigidly attached to the underside of a connecting plate 11 in which an opening is provided, through which opening a guide rod 8 extends. The central axes of the guide rod 8, the guide bush 10 and the guide bush 9 coincide.

The gripping device 1 further comprises a double-acting pneumatic cylinder 12, to which pneumatic lines 13 are connected. The pneumatic cylinder 12 acts between the upper plate 3 of the main frame 2 and the connecting plate 11, whilst the cylinder housing 14 is rigidly connected to the underside of the upper plate 3 and the end of the cylinder rod 15 of the pneumatic cylinder 12 is rigidly connected to the connecting plate 11.

A flexible cord 16 is provided at the bottom end of the guide rod 8, to the lower end of which a suction cup assembly 17 is attached. The suction cup assembly 17 comprises a suction cup 18 as known to those skilled in the art, to which a vacuum line 19 is connected, as well as a suction cup frame configured as a connecting element 20. Said connecting element 20 comprises a disc-shaped part 21 and a truncated conical part 22 extending towards the guide bush 10.

During operation, the gripping device 1 is either in a free position (figure 1a) or in a fixed position (figure 1b) or moves between said positions. The position of the pneumatic cylinder 12 is the determining factor in this regard.

In the free position shown in figure 1a, an object to be engaged is engaged by the suction cup 18, with the flexible nature of the cord 16 enabling the suction cup 18 to take on the orientation of the object to be picked up, even if said object is somehow obliquely oriented. Once the suction cup 18 has engaged the object, the pneumatic cylinder 12 is actuated, as a result of which the cylinder rod 15 telescopes out and the guide bush 10 simultaneously moves downward along and between the guide rod 8 and the guide bush 9 until the truncated conical part 22 is positioned in the open bottom end of the guide bush 10 and the bottom side of the guide bush 10 abuts against the upper side of the disc-shaped part 21 of the connecting element 20. In this fixed position, movement of the suction cup 18 relative to the main frame 2 is not possible and consequently any movements will be carried out jointly. The rigid connection between the suction cup 18 and the main frame 2 rules out the risk of oscillation of the engaged object, so that there is only a small risk, if any, that the connection between the object and the suction cup will be broken.

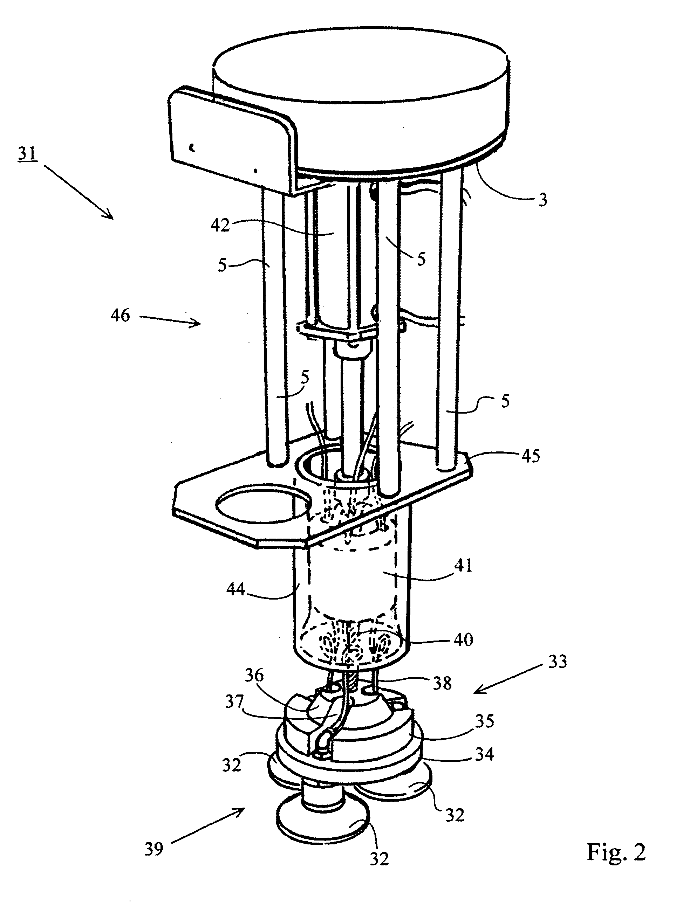

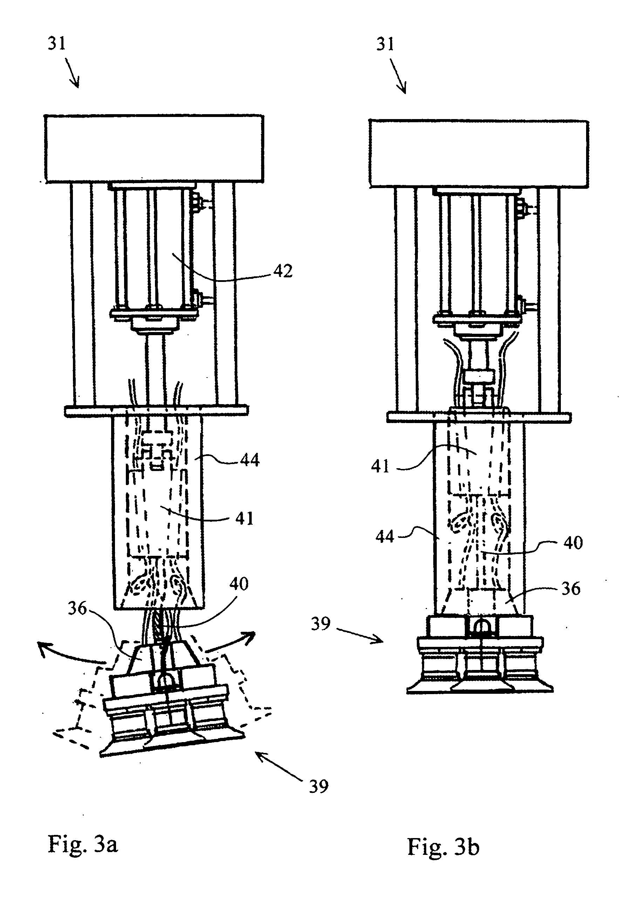

Figures 2, 3a and 3b relate to a gripping device 31 according to a second preferred embodiment of the invention. The device 31 resembles the gripping device 1. The description below of the gripping device 31 will focus in particular on the differences with the gripping device 1. Like parts will be indicated by the same numerals.

The gripping device 31 comprises three suction cups 32, which are arranged in an evenly spaced, triangular configuration. The suction cups 32 are provided on the underside of the connecting element 33. The connecting element 33 comprises two disc-shaped parts 34, 35, with a truncated conical part 36 on top thereof. A recess 37 is provided for each of the suction cups 32 in the disc-shaped part 35 and the truncated conical part 36, through which recesses the vacuum lines 38 that connect to the respective suction cups 32 extend. The suction cup assembly 39 as essentially formed by the above-described connecting element 33 and the associated suction cups 32 is suspended from the bottom end of a flexible steel cord 40. At its upper side, said cord 40 is attached to the bottom side of a cylindrical guide body 41. Said guide body 41 is provided with passages through which the three vacuum lines 38 extend from the bottom side to the upper side.

The guide body 41, and with it the suction cup assembly 39, can be moved up and down by suitable actuation of the pneumatic cylinder 42. The pneumatic cylinder 42 is provided directly above the guide body 41. The piston rod 43 is connected to the guide body 41 with its bottom end. A guide bush 44 is provided for guiding said up-and-down movement of the guide body 41, the internal diameter of which guide bush 44 corresponds to the external diameter of the guide body 41. The guide bush 44 is rigidly connected to the underside of the lower plate 45. The guide bush 44, the lower plate 45, the columns 5 and the upper plate 3 form part of a main frame 46 for the gripping device 31.

In figure 2, the suction cup assembly 39 is in a free position, which implies that the suction cup assembly 39 can freely move with respect to the mainframe 46, at least insofar as the flexible steel cord 40 allows this, as a result of which the suction cups 32 can adapt their orientation to that of an (obliquely oriented) surface of an object to be engaged.

In figure 3b the suction cup frame has been moved from the free position to a fixed position by moving the guide body 41 up within the guide bush 44 through suitable actuation of the pneumatic cylinder 42. The truncated conical part 36 falls within the lower end of the guide bush 44, whilst the upper side of the disc-shaped part 35 abuts against the underside of the guide bush 44. Near said underside, the internal diameter of the guide bush 44 narrows, as a result of which the configuration of the guide bush 44 at that location contributes to the self-locating nature of the suction cup assembly 39 towards the centre of the guide bush 44, just like the sloping side of the truncated conical part 36 contributes thereto. In the fixed position, movement of the suction cup assembly 39 or, in other words, of the suction cups 32, relative to the main frame 46 is not possible.

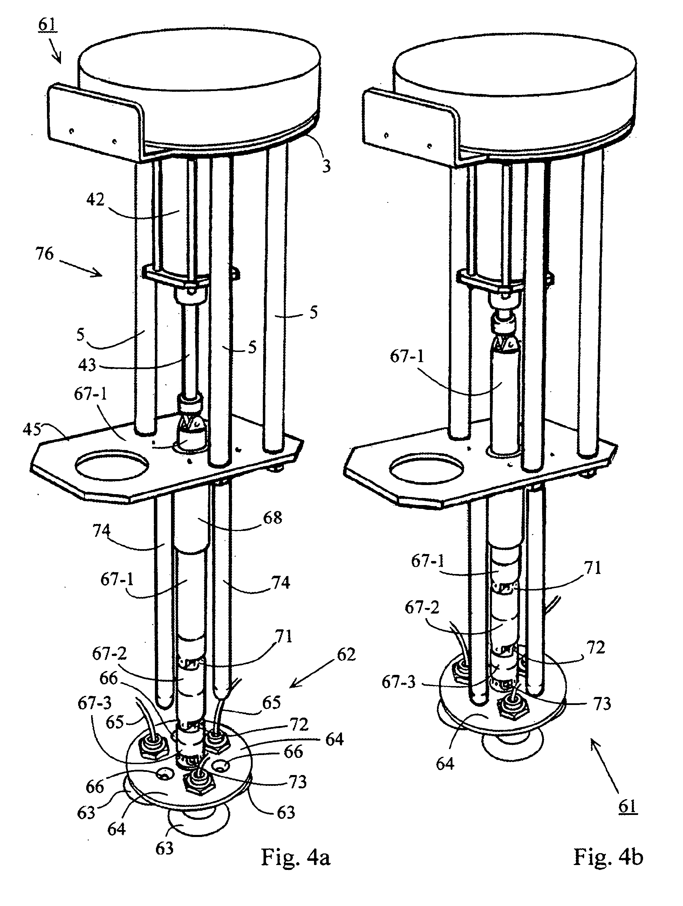

Figures 4a and 4b show the gripping device 61 according to a third preferred embodiment of the invention in a free position and in a fixed position, respectively. The gripping device 61 comprises a suction cup assembly 62. Said suction cup assembly 62 comprises a circular disc 64, on the underside of which three suction cups 63 are arranged in a triangular configuration, which suction cups are each connected to an associated vacuum line 65, which vacuum lines extend through holes in the disc 64. At the upper side of the disc 64, cup-shaped recesses 66 are provided between the suction cups 63.

A guide bush 68 is provided at the bottom side of the lower plate 45. A guide rod 67 can be moved up and down within the guide bush 68 by suitable actuation of the pneumatic cylinder 42 provided with the piston rod 43. The guide rod 67 is made up of three guide rod parts 67-1, 67-2 and 67-3, which are interconnected via double-acting hinges 71, 72 whose hinge axes are oriented perpendicularly to each other. The suction cup assembly 62 is connected to the lower end of the lowermost guide rod part 67-3, likewise via a double-acting hinge 73. The double-acting hinges 71, 72 and 73, which introduce two degrees of freedom per hinge, enable the suction cup assembly 62 to take on various spatial orientations, at least in the free position as shown in figure 4a, which orientations are needed in order to be able to properly engage an object that may be obliquely oriented, with all three suction cups 63 abutting against the surface of the object to be engaged, via which surface engagement of the object is to take place. Because of the rigid nature of the guide rod 67, it is more easily possible in that case to have the abutment of the suction cups 63 against the objects to be engaged take place under a certain abutment pressure. On the outer side of the guide bush 68 and the guide rod 67, three equidistant, parallel positioning rods 74 having a spherical lower end 75 are provided. The spherical shape of said ends 75 corresponds to the shape of the cup-shaped recesses 63 in the disc 64, whilst in addition the relative positions of the positioning rods 74 correspond to those of the recesses 63. The positioning elements 74 also function as guide means for the up-and-down movement of the guide rod 67.

Retraction of the piston rod 43 by suitable actuation of the pneumatic cylinder 42 causes the guide rod 67 to be pulled straight upwards, with the spherical lower ends 75 of the respective positioning rods 74 slipping into the cup-shaped recesses 63 at the upper side of the disc 64. As a result, further movement of the suction cup assembly 62 relative to the positioning rods 74, and thus to the main frame 76 of which the positioning rods 74 form part, is rendered impossible.

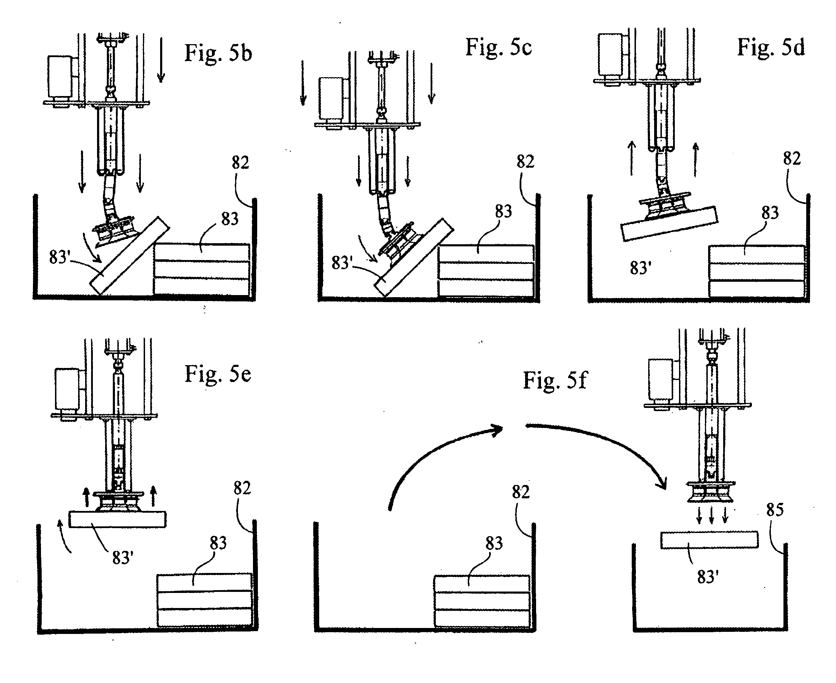

Now the manner in which the gripping device 61 can be operated will be explained in more detail with reference to figures 5a-5f. The gripping device 61 is rigidly connected to the manipulator head provided at the end of a manipulator, such as a robot 81. The robot 81 receives an instruction from a control system to take an object 83 from a product bin 82 and to move said object to a collecting bin 85 (figure 5f). The gripping device 61 is provided with a camera, the lens 84 of which is shown. Said camera makes it possible to visually see the contents of the product bin 82, more specifically to see the way in which the products in the product bin 82 are distributed. The object 83' in figure 5a is obliquely oriented, viz. at an angle of about 45°. It can be seen in figure 5a that the gripping device 61 is in the free position, in which position the suction cup assembly 62 has a high degree of freedom to take on various orientations. Based on information obtained from the camera 84, the robot 81 positions the gripping device 61 over the object 83' such that the suction cup assembly 62 is centrally positioned over the product 83'. The robot 81 then moves the gripping device 61 vertically downwards as indicated by the arrow 86. During said movement, contact will at some point be established between one of the suction cups 63 (see figure 5b) and the object 83', as a result of which the suction cup assembly 62 will cause the gripping device 61 to tilt upon further downward movement, until the suction cup assembly 62 has taken on the same orientation as the obliquely oriented object 83'. Said tilting is rendered possible by the double-acting hinges 71-73 associated with the guide rod 67.

As soon as the situation shown in figure 5c is reached, or possibly sooner, a reduced pressure is created in the space between the suction cups 63 and the object 83' via the vacuum lines 65, as a result of which the object 83' is engaged on account of the suction force exerted by the suction cups 63. Alternatively, the gripping device may be moved to the fixed position as soon as the object 83' is engaged by the suction cups 63 and even before the gripping device 61 is moved upwards by the robot 81, as a result of which also the object 83' that has just been engaged is lifted to a limited extent.

The robot 81 then moves the gripping device 61 up again, so that the object 83 is moved entirely clear both of the product bin 82 and of the other products 83 in the product bin 82 (figure 5d) (insofar as that should not be the case yet). The gripping device 61 is then moved to the fixed position by actuation of the double-acting pneumatic cylinder 42 (figure 5e). The robot 81 moves the gripping device 61 with the object 83' sideways to the collecting bin 85, in any case after the gripping device 61 has been moved to the fixed position. The object can be released there by releasing the suction force of the suction cups 63 above said collecting bin, as a result of which the object 83' is dropped into the collecting bin 85 (see figure 5f). Alternatively it is also conceivable, of course, for the robot 81 not to move sideways, instead of which the product bin 82 will be moved sideways, thereby creating space for the collecting bin 85 to be positioned under the gripping device, likewise via a sideways movement. According to another alternative, the gripping device 61 does not drop the object 83' in the collecting bin 85 but instead places the object 83 at a precisely defined location in the collecting bin 85, for example in a corner thereof. This possibility exists in particular because the object 83' is held in a defined position relative to the main frame 76 in the fixed position.

## Claims

1. A device (61) for gripping objects, comprising at least one suction cup (63) which can be connected to a vacuum source via a vacuum line (65) a main frame which can be connected to a manipulator head, a suction cup frame (62) to which said at least one suction cup is rigidly connected, and a connecting element (67) which connects the suction cup frame and the main frame, wherein the device also comprises fixation means comprising at least one fixation element (74) as well as moving means (42, 43) for moving said at least one fixation element and said suction cup frame relative to each other between a fixed position, in which said at least one fixation element and said suction cup frame are rigidly positioned relative to each other on account of their mutual abutment, and a free position, in which said at least one fixation element and said suction cup frame are clear of each other, **characterized in that** the connecting element (67) comprises a number of connecting rod parts (67-1,67-2, 67-3) as a hinge means (71,72) for hinging the connecting rod parts together at the ends thereof, and **in that** the hinge means (71,72) enable two connected connecting rod parts to hinge in two mutually perpendicular directions relative to each other.

2. A device according to claim 1, **characterised in that** the suction cup frame (62) moves towards said at least one fixation element (74) or away from said at least one fixation element when being moved between the fixed position and the free position by the moving means.

3. A device according to claim 1 or 2, **characterised in that** said at least one fixation element (74) and said suction cup frame (62) have matching shapes at the location where they abut in the fixed position.

4. A device according to any one of the preceding claims, **characterised in that** three suction cups (63) are connected to the suction cup frame (62).

5. A device according to claim 4, **characterised in that** said three suction cups are arranged in an evenly spaced configuration.

6. A device according to any one of the preceding claims, **characterised in that** the device comprises guide means (68) for guiding the connecting element (67) during the movement of said at least one fixation element and said suction cup frame relative to each other.

7. A method for operating a device according to any one of the preceding claims, comprising the steps of:
- providing the device (61) connected to a manipulator head of a manipulator,
- moving the device by means of said manipulator to a position directly above an object to be engaged,
- moving the device downwards by means of said manipulator until said at least one suction cup (63) abuts against the object to be engaged, whilst the fixation means (74) are in a free position,
- engaging the object through suction force by means of said at least one suction cup,
- moving the device and the object suspended from said at least one suction cup upwards by means of the manipulator, at least until the object is completely clear of its environment,
- putting the fixation means in the fixed position,
- further moving the device and the object suspended from said at least one suction cup to another position by means of the manipulator,
- releasing the object engaged by said at least one suction cup at said other position.

## Patentansprüche

1. Vorrichtung (61) zum Ergreifen von Gegenständen, mit wenigstens einem Saugnapf (63), der über eine Unterdruckleitung (65) an eine Unterdruckquelle angeschlossen werden kann, einem Hauptrahmen, der mit einem Manipulatorkopf verbunden werden kann, einem Saugnapfrahmen (62), mit dem der wenigstens eine Saugnapf starr verbunden ist, und einem Verbindungselement (67), das den Saugnapfrahmen mit dem Hauptrahmen verbindet, wobei die Vorrichtung auch Fixiereinrichtungen mit wenigstens einem Fixierelement (74) sowie Verstelleinrichtungen (42, 43) zum Verstellen des wenigstens einen Fixierelements und des Saugnapfrahmens relativ zueinander zwischen einer festen Position, in der das wenigstens eine Fixierelement und der Saugnapfrahmen aufgrund ihrer gegenseitigen Anlage relativ zueinander starr positioniert sind, und einer freien Position umfasst, in der das wenigstens eine Fixierelement und der Saugnapfrahmen einander nicht berühren, **dadurch gekennzeichnet, dass** das Verbindungselement (67) eine Anzahl Verbindungsstangenteile (67-1, 67-2, 67-3) sowie eine Gelenkeinrichtung (71, 72) umfasst, mit der die Verbindungsstangenteile an ihren Enden aneinander angelenkt sind, und dass die Gelenkeinrichtungen (71, 72) es zwei verbundenen Verbindungsstangenteilen ermöglichen, sich in zwei zueinander senkrechten Richtungen relativ zueinander gelenkig zu bewegen.

2. Vorrichtung nach Anspruch 1, **dadurch gekennzeichnet, dass** sich der Saugnapfrahmen (62) auf das wenigstens eine Fixierelement (74) zu oder von dem wenigstens einen Fixierelement weg bewegt, wenn er von der Verstelleinrichtung zwischen der festen Position und der freien Position verstellt wird.

3. Vorrichtung nach Anspruch 1 oder 2, **dadurch gekennzeichnet, dass** das wenigstens eine Fixierelement (74) und der Saugnapfrahmen (62) an der Stelle, an der sie in der festen Position aneinander anliegen, zueinander passende Formen aufweisen.

4. Vorrichtung nach einem der vorhergehenden Ansprüche, **dadurch gekennzeichnet, dass** drei Saugnäpfe (63) mit dem Saugnapfrahmen (62) verbunden sind.

5. Vorrichtung nach Anspruch 4, **dadurch gekennzeichnet, dass** die drei Saugnäpfe gleichmäßig voneinander beabstandet angeordnet sind.

6. Vorrichtung nach einem der vorhergehenden Ansprüche, **dadurch gekennzeichnet, dass** die Vorrichtung Führungsmittel (68) zur Führung des Verbindungselements (67) während des Verstellens des wenigstens einen Fixierelements und des Saugnapfrahmens relativ zueinander umfasst.

7. Verfahren zum Betreiben einer Vorrichtung nach einem der vorhergehenden Ansprüche, mit den folgenden Schritten:
- die mit einem Manipulatorkopf eines Manipulators verbundene Vorrichtung (61) wird bereitgestellt,
- die Vorrichtung wird mittels des Manipulators in eine Position unmittelbar oberhalb eines zu erfassenden Gegenstands verstellt,
- die Vorrichtung wird mittels des Manipulators nach unten verstellt, bis der wenigstens eine Saugnapf (63) an dem zu erfassenden Gegenstand anstößt, während sich die Fixiereinrichtungen (74) in einer freien Position befinden,
- der Gegenstand wird mittels des wenigstens einen Saugnapfes durch Saugkraft erfasst,
- die Vorrichtung und der an dem wenigstens einen Saugnapf hängende Gegenstand werden mittels des Manipulators nach oben verstellt, zumindest bis sich der Gegenstand vollständig in einem Abstand von seiner Umgebung befindet,
- die Fixiereinrichtungen werden in die feste Position gebracht,
- die Vorrichtung und der an dem wenigstens einen Saugnapf hängende Gegenstand werden mittels des Manipulators weiter an eine andere Stelle bewegt,
- der von dem wenigstens einen Saugnapf erfasste Gegenstand wird an der anderen Stelle freigegeben.

## Revendications

1. Dispositif (61) permettant de saisir des objets, comprenant au moins une ventouse (63) qui peut être reliée à une source de dépression par l'intermédiaire d'une conduite de dépression (65), un cadre principal qui peut être relié à une tête de manipulation, un cadre de ventouse (62) auquel ladite au moins une ventouse est reliée de manière rigide, et un élément de liaison (67) qui relie le cadre de ventouse et le cadre principal, dans lequel le dispositif comprend également un moyen de fixation comprenant au moins un élément de fixation (74) ainsi qu'un moyen de déplacement (42, 43) pour déplacer ledit au moins un élément de fixation et ledit cadre de ventouse l'un par rapport à l'autre entre une position fixe, à laquelle ledit au moins un élément de fixation et ledit cadre de ventouse sont positionnés de manière rigide l'un par rapport à l'autre en venant en butée l'un contre l'autre, et une position libre, à laquelle ledit au moins un élément de fixation et ledit cadre de ventouse sont séparés l'un de l'autre,
**caractérisé en ce que**
l'élément de liaison (67) comprend un nombre de parties de bielles (67-1, 67-2, 67-3) ainsi qu'un moyen de charnière (71, 72) pour relier en charnière les parties de bielles aux extrémités de celles-ci, et
**en ce que** le moyen de charnière (71, 72) permet à deux parties de bielles reliées d'être reliées en charnière dans deux sens perpendiculaires l'un à l'autre.

2. Dispositif selon la revendication 1, **caractérisé en ce que** le cadre de ventouse (62) se déplace vers ledit au moins un élément de fixation (74) ou s'éloigne dudit au moins un élément de fixation lorsqu'il est déplacé entre la position fixe et la position libre par le moyen de déplacement.

3. Dispositif selon la revendication 1 ou 2, **caractérisé en ce que** ledit au moins un élément de fixation (74) et ledit cadre de ventouse (62) ont des formes correspondantes à l'emplacement où ils viennent en butée l'un contre l'autre à la position fixe.

4. Dispositif selon l'une quelconque des revendications précédentes, **caractérisé en ce que** trois ventouses (63) sont reliées au cadre de ventouse (62).

5. Dispositif selon la revendication 4, **caractérisé en ce que** lesdites trois ventouses sont agencées dans une configuration équidistante.

6. Dispositif selon l'une quelconque des revendications précédentes, **caractérisé en ce que** le dispositif comprend un moyen de guidage (68) pour guider l'élément de liaison (67) au cours du déplacement dudit au moins un élément de fixation et dudit cadre de ventouse l'un par rapport à l'autre.

7. Procédé de fonctionnement d'un dispositif selon l'une quelconque des revendications précédentes, comprenant les étapes consistant à :
- fournir le dispositif (61) lié à une tête de manipulation d'un manipulateur,
- déplacer le dispositif au moyen dudit manipulateur à une position directement au-dessus d'un objet à mettre en prise,
- déplacer le dispositif vers le bas au moyen dudit manipulateur jusqu'à ce que ladite au moins une ventouse (63) vienne en butée contre l'objet à mettre en prise, pendant que le moyen de fixation (74) est à une position libre,
- mettre en prise l'objet par une force d'aspiration au moyen de ladite au moins une ventouse,
- déplacer le dispositif et l'objet suspendu à ladite au moins une ventouse vers le haut au moyen du manipulateur, au moins jusqu'à ce que l'objet soit complètement séparé de son environnement,
- mettre le moyen de fixation à la position fixe,
- poursuivre le déplacement du dispositif et de l'objet suspendu à ladite au moins une ventouse jusqu'à une autre position au moyen du manipulateur,
- libérer l'objet mis en prise par ladite au moins une ventouse à ladite autre position.
